# EUROPEAN PATENT APPLICATION

(11) **EP 4 737 718 A1**
(43) Date of publication of application: **06.05.2026**
(21) Application number: 25159797.7
(22) Date of filing: 25.02.2025
(51) Int. Cl.: F03D 80/00, F03D 80/50, F03D 15/00

(54) **A ROTOR LOCK SYSTEM IN A WIND TURBINE GENERATOR**

(30) Priority: 29.10.2024 IN 202411082692
(71) Applicant: RE Technologies GmbH, 22083 Hamburg (DE)
(72) Inventor: REDDY M., SHANKAR, 560066 Bengaluru (IN)
(74) Representative: Buzzi, Notaro & Antonielli d'Oulx S.p.A.

(57) **Abstract**

The present invention provides a rotor lock system (100) for a wind turbine generator. To move the rotor lock system (100) a lubrication pump (140) is switched ON. The lubrication pump sprays lubrication oil at high pressure through a nozzle (170) on the fins of the impeller (160) mounted on high-speed shaft (220) of a gearbox (130) to rotate the high-speed shaft (220). The high-speed shaft of the gearbox (130) is configured to rotate a main shaft (210) and a rotor lock disc (120) of a wind turbine to align the rotor lock disc (120) with respect to plurality of lock-pins (110).

## Description

### Field of Invention:

The present invention relates to a rotor lock system in a wind turbine generator.

### Background of the Invention

The following background discussion includes information that may be useful in understanding the present invention. It is not an admission that any of the information provided herein is prior art or relevant to the presently claimed invention, or that any publication expressly or implicitly referenced is prior art.

During strong winds or for maintenance, a wind turbine generator is configured to be put on shutdown mode. During the shutdown mode, in addition to activating the brake systems, the rotor is locked through the rotor lock disc mounted on the main shaft by inserting one or more locking pins in the holes of the rotor lock disc. The locking pins are affixed on the main bearing housing or the main frame. To insert the pins in the rotor lock disc holes, the rotor lock disc needs to rotated to bring the holes on the rotor lock disc in alignment with the location of the locking pins. After the locking pins and the holes on the rotor lock disc are aligned, the locking pins are pushed into the rotor lock disc holes thereby locking the rotor. Thus, to align the rotor lock disc holes with the pins, the rotor lock disc needs to be rotated. Conventionally, the rotor lock disc is rotated either manually or by rotating a brake disc by means of a worm gear drive. The brake disc is mounted on a high speed shaft which is operably connected to the main shaft through a gearbox. The rotor lock disc is mounted on the main shaft. Thus, by rotating the brake disc, the rotor lock disc is rotated.

However, the worm gear drive suffers from various shortcomings such as high initial cost, high maintenance cost.

There is a need for an efficient rotor lock system which eliminates the need of a worm gear drive to align the locking pins and the holes on the rotor lock disc.

### Objectives of the Invention:

The primary object of the present invention is to provide a system which eliminates the need of using the worm gear drive and/or manually rotating the rotor lock disc.

Another object of the present invention is to provide a rotor lock system comprising an impeller mounted on the high speed shaft of the gear box within the gearbox housing.

Another object of the present invention is to provide a rotor lock system which has advantages of being efficient and cost effective.

### Summary of the Invention:

In an aspect, present invention provides a wind turbine generator, the rotor lock system (100) comprising:
a) a rotor lock disc (120) having one or more holes thereon, the rotor lock disc (120) mounted to a main shaft (210), the main shaft (210) operably connected through a gearbox (130) to a high speed shaft (220) of the gearbox, the rotor lock disc (120) configured to be rotated upon rotating the high speed shaft (220);
b) one or more locking pins (110) mounted on a main bearing housing (400) of the wind turbine generator or a main frame of the wind turbine generator, the one or more locking pins (110) configured to be inserted in one or more holes on the rotor lock disc (120) for locking the rotor lock disc (120);
c) an impeller (160) comprising a plurality of impeller fins, the impeller (160) mounted on the high-speed shaft (220) of the gearbox (130) such that upon rotating the impeller (160), the high speed shaft (220) and consequently the rotor lock disc (120) being rotated for aligning the holes on the rotor lock disc (120) with the locking pins (110), wherein the impeller (160) configured to be rotated by spraying a high-pressure jet of liquid on the impeller fins.

### Detailed description of drawings:

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of their scope. The invention will be described and explained with additional specificity and detail with the accompanying drawings in which:

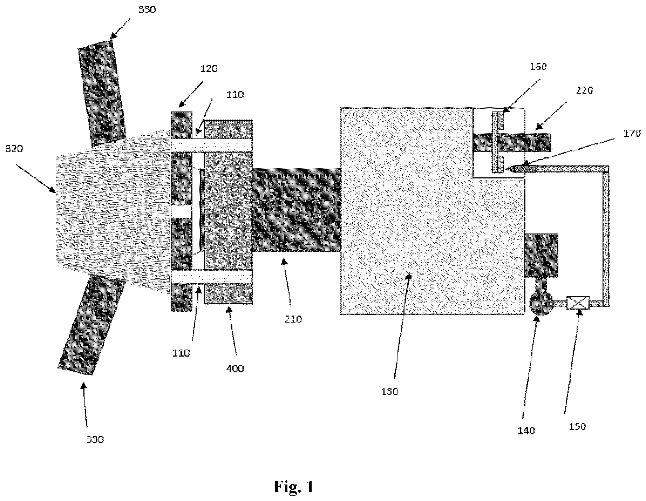

Fig. 1: illustrates a top view of a wind turbine generator depicting an embodiment of a rotor lock system of the present invention.

### Detailed description:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

The terms "comprises", "comprising", "includes", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

FIG. 1 illustrates a top view of a wind turbine generator depicting an embodiment of a rotor lock system of the present invention. The wind turbine generator comprises a tower, a nacelle rotatably coupled to the top of the tower by a yaw system, a rotor hub 320 mounted to the nacelle and a plurality of wind turbine rotor blades 330 coupled to the rotor hub 320. The nacelle and rotor blades 330 are turned and directed into the wind direction by the yaw system. The nacelle houses all of the generating components of the wind turbine, including the generator, gearbox 130, drive train and brake assembly, as well as convertor equipment for converting the mechanical energy of the wind into electrical energy for provision to the grid. The nacelle also necessarily contains a main shaft housing, which houses a main shaft 210 that is connected at a forward end to the hub 320 and rotor blades 330, and at a rear end to the generating components.

The main bearing housing 400 supports a main shaft 210 which is attached to the rotor hub 320 by a hub mounting flange.

In an embodiment, the rotor lock system 100 of the present invention comprises a rotor lock disc 120 mounted to a main shaft 210 of the wind turbine generator such that the rotor lock disc 120 is rotated when the main shaft 210 is rotated.

The rotor lock disc 120 further comprises several sets of through holes. The sets of through holes are positioned at an inner portion of the rotor lock disk 120 relatively close to a central bore of the rotor lock disc 120. The first set of through holes is used to mount the rotor lock disc 120 to the rotor hub 320 or to the main shaft 210 or both by means of a screwed connection. The second set of through holes may be used to insert locking pins 110 to lock the rotor lock disc 120.

According to an embodiment, the rotor lock system further comprises at least two locking pins 110. The locking pins 110 are mounted on the main bearing housing 400 facing towards the rotor locking disc 120. Alternatively, the locking pins 110 can also be mounted on a main frame (or nacelle frame) of the wind turbine generator.

An impeller 160 comprising a plurality of impeller fins is mounted within the gearbox 130 on a high-speed shaft 220. Alternatively, since the high speed shaft 220 is extending out of the gearbox 130, the impeller 160 can be mounted in an appropriate housing outside the gearbox 130 on the high speed shaft 220 extending outside the gearbox 130.

According to an embodiment of the present invention, to rotate the impeller 160, lubrication oil is pumped in from the oil sump of the gearbox and sprayed at high pressure on the fins of the impeller 160. Since the impeller 160 is mounted on the high speed shaft 220 of the gearbox 130, rotating the impeller fins rotates the high-speed shaft 220 which in turn rotates the main shaft 210 and the rotor lock disc 120 mounted to the main shaft 210. Rotating the rotor lock disc 120 helps align the holes on the rotor lock disc 120 with the locking pins 110. Upon aligning, the locking pins 110 are inserted, either manually or through an actuating means, into the holes of the rotor lock disc 120 thereby locking the rotor lock disc 120.

The impeller 160 is configured to be rotated by spraying a high-pressure jet of liquid through a nozzle 170 on the impeller fins. A flow control valve 150 is also provided in the liquid supply line to the nozzle 170 to control the pressure of the jet spray thereby enabling control over the pressure of the spray and thus the speed of rotation of the impeller fins.

In an embodiment, preferably the liquid is lubrication oil within the gearbox 130 itself. A lubrication pump 140 used by the gearbox 130 to circulate the lubrication oil within the gearbox 130 is used to pump the lubrication oil from an oil sump within the gearbox 130 onto the impeller fins through the nozzle 170. The impeller fins are arranged such that after spraying the lubrication oil on the fins of the impeller 160, the lubrication oil is directed back into the oil sump. According to an embodiment, the lubrication pump 140 and the flow control valve 150 are configured to be operated through a controller of the wind turbine.

Many modifications and other embodiments of the invention set forth herein will readily occur to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

The foregoing description of embodiments of the invention has been presented for purposes of illustration and description. It is not intended to be exhaustive or to limit the invention to the precise form disclosed, and modifications and variations are possible in light of the above teachings or may be acquired from the practice of the invention. The embodiments were chosen and described in order to explain the principals of the invention and its practical application to enable one skilled in the art to utilize the invention in various embodiments and with various modifications as are suited to the particular use contemplated.

## Claims

1. A rotor lock system (100) in a wind turbine generator, the rotor lock system (100) comprising:
a) a rotor lock disc (120) having one or more holes thereon, the rotor lock disc (120) mounted to a main shaft (210), the main shaft (210) operably connected through a gearbox (130) to a high speed shaft (220) of the gearbox, the rotor lock disc (120) configured to be rotated upon rotating the high speed shaft (220);
b) one or more locking pins (110) mounted on a main bearing housing (400) of the wind turbine generator or a main frame of the wind turbine generator, the one or more locking pins (110) configured to be inserted in one or more holes on the rotor lock disc (120) for locking the rotor lock disc (120);
c) an impeller (160) comprising a plurality of impeller fins, the impeller (160) mounted on the high-speed shaft (220) of the gearbox (130) such that upon rotating the impeller (160), the high speed shaft (220) and consequently the rotor lock disc (120) being rotated for aligning the holes on the rotor lock disc (120) with the locking pins (110), wherein the impeller (160) configured to be rotated by spraying a high-pressure jet of liquid on the impeller fins.

2. The rotor lock system (100) as claimed in 1, wherein the liquid is lubrication oil being pumped in from an oil sump of the gearbox (130) by a lubrication pump (140).

3. The rotor lock system (100) as claimed in 1, wherein the impeller (160) fins being arranged such that after spraying the lubrication oil thereon, the lubrication oil being directed back into the oil sump.

4. The rotor lock system (100) as claimed in 1, wherein the impeller (160) being configured to be rotated by spraying a high-pressure jet of liquid on the impeller fins through a nozzle (170) facing the impeller fins.

5. The rotor lock system (100) as claimed in claim 1, the system comprising a flow control valve (150) for controlling the flow of liquid.

6. The rotor lock system as claimed in Claim 5, wherein the lubrication pump (140) and the flow control valve (150) configured to be operated through a controller of the wind turbine.

7. The rotor lock system as claimed in Claim 1, wherein the impeller (160) is mounted within the gearbox (130) on the high speed shaft (220) of the gearbox (130).
